# EUROPÄISCHE PATENTANMELDUNG

(11) **EP 4 113 170 A1**
(43) Veröffentlichungstag der Anmeldung: **04.01.2023**
(21) Anmeldenummer: 21183184.7
(22) Anmeldetag: 01.07.2021
(51) Int. Cl.: G01S 17/89, G01S 17/933, G01S 7/481

(54) **FLUGGERÄT UND VERFAHREN ZUM BETREIBEN EINES FLUGGERÄTS**

(71) Anmelder: mdGroup Germany GmbH, 57072 Siegen (DE)
(72) Erfinder: Halgasik, Jaroslav, 57072 Siegen (DE); Maczijewski, 57072 Siegen (DE)
(74) Vertreter: Glawe, Delfs, Moll

(57) **Zusammenfassung**

Fluggerät, umfassend ein Lidar-Gerät (18), das ausgehend von dem Lidar-Gerät (18) in ein Raumgebiet (22) hinein Messstrahlen (30) aussendet, wobei das Fluggerät (19) einen Spiegel (21) umfasst, der die Messstrahlen (30) in einem ersten Teilbereich (23) des Raumgebiets (22) nicht ablenkt und der die Messstrahlen in einem zweiten Teilbereich (24) des Raumgebiets (22) ablenkt, und mit einer Steuereinheit (25), die Messdaten aus dem ersten Teilbereich (23) des Raumgebiets (22) von Messdaten aus dem zweiten Teilbereich (24) des Raumgebiets (22) separiert und die Messdaten aus dem zweiten Teilbereich (24) des Raumgebiets (22) einer getrennten Verarbeitung zuführt. Die Erfindung betrifft auch ein Verfahren zum Betreiben eines Fluggeräts.

## Beschreibung

Die Erfindung betrifft ein Fluggerät mit einer Messvorrichtung, die ausgehend von der Messvorrichtung in ein Raumgebiet hinein Messstrahlen aussendet. Die Erfindung betrifft ein Verfahren zum Betreiben eines Fluggeräts.

Mit solchen Messvorrichtungen, die insbesondere in Form von Lidar-Geräten bekannt sind, können Informationen aus der Umgebung der Messvorrichtung gewonnen werden. Trifft ein Messstrahl auf eine Struktur in der Umgebung des Fluggeräts, so kann ein reflektierter Anteil des Lichts mit der Messvorrichtung detektiert werden und aus der Laufzeit auf die Entfernung zwischen dem Fluggerät und der Struktur geschlossen werden. Aus einer Mehrzahl solcher Messdaten über die Entfernung zwischen der Messvorrichtung und der Struktur und anhand der bekannten Richtung des Messstrahls kann die Form einer Oberfläche der Struktur ermittelt werden. Fliegt beispielsweise das Fluggerät über einem geographischen Gebiet, so kann die topographische Gestalt der Erdoberfläche in diesem Gebiet ermittelt werden.

Der Erfindung liegt die Aufgabe zugrunde, ein unbemanntes Fluggerät und ein Verfahren zum Betreiben eines unbemannten Fluggeräts vorzustellen, die einen flexibleren Einsatz des Fluggeräts ermöglichen. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Das erfindungsgemäße Fluggerät umfasst einen Spiegel, der die Messstrahlen in einem ersten Teilbereich des Raumgebiet nicht ablenkt und der die Messstrahlen in einem zweiten Teilbereich des Raumgebiets ablenkt. Das Fluggerät umfasst eine Steuereinheit, die Messdaten aus dem ersten Teilbereich des Raumgebiet von Messdaten aus dem zweiten Teilbereich des Raumgebiets separiert und die Messdaten aus dem zweiten Teilbereich einer getrennten Verarbeitung zuführt.

Die Erfindung beruht auf der Erkenntnis, dass es durch Aufteilung des mit der Messvorrichtung abgedeckten Raumgebiets in zwei Teilbereiche möglich wird, die mit der Messvorrichtung gewonnenen Messdaten zu verschiedenen Zwecken zu nutzen. Beispielsweise können die Messstrahlen in dem ersten Teilbereich des Raumgebiets genutzt werden, um Nutzdaten zu gewinnen, also Daten, die für einen von der aktuellen Flugmission unabhängigen Zweck gewonnen werden. Nutzdaten können beispielsweise die Form eines Objekts oder einen Ausschnitt der Erdoberfläche repräsentieren oder sich auf den Zustand einer technischen Einrichtung beziehen, die mit der Messvorrichtung untersucht worden ist. Die in dem zweiten Teilbereich des Raumgebiets gewonnenen Messdaten können für Zwecke der Flugmission verwendet werden.

In einer Ausführungsform werden die Messdaten aus dem ersten Teilbereich des Raumgebiets einem Rechenmodul zugeführt, das die Messdaten verarbeitet, um die Form einer Oberfläche zu rekonstruieren, auf die die Messstrahlen in dem ersten Teilbereich des Raumgebiets getroffen sind. Das Rechenmodul kann ein Element des Fluggeräts sein. Möglich ist auch, dass das Rechenmodul ein von dem Fluggeräts separates Element ist. Die Datenübertragung zu dem Rechenmodul kann dann beispielsweise per Funk erfolgen. Als Messdaten aus dem ersten Teilbereich des Raumgebiets werden Informationen bezeichnet, die abgeleitet wurden aus Messstrahlen, die die Messvorrichtung in den ersten Teilbereich des Raumgebiets ausgesendet hat. Entsprechend ist die Angabe Messdaten aus dem zweiten Teilbereich des Raumgebiets zu verstehen.

Die Messdaten aus dem zweiten Teilbereich des Raumgebiets können Navigationsdaten sein. Die Navigationsdaten können der Steuereinheit des Fluggeräts zugeführt werden, das die Messdaten verarbeitet, um daraus einen die Flugposition, die Flugrichtung, die Fluggeschwindigkeit und/oder die Fluglage des Fluggeräts betreffenden Steuerbefehl abzuleiten. Mit dem Steuerbefehl können ein Antrieb und/oder ein aerodynamisches Steuerelement des Fluggeräts angesteuert werden. Die Steuereinheit kann ein Element des Fluggeräts sein. Möglich ist auch, dass die Steuereinheit oder Teile davon von dem Fluggerät separate Elemente sind. Die Datenübertragung zwischen der Steuereinheit und dem Fluggerät kann dann beispielsweise per Funk erfolgen.

Die Messdaten aus dem zweiten Teilbereich des Raumgebiets können in der Steuereinheit des Fluggeräts zum Zwecke der Hindernisvermeidung verarbeitet werden. In der Steuereinheit kann ein vorgegebener Flugpfad hinterlegt sein. Die Steuereinheit kann dazu ausgelegt sein, das Fluggerät selbsttätig, also ohne Eingriffe einer Bedienperson von außen, entlang des vorgegebenen Flugpfads zu steuern. Die Steuereinheit kann eine Funktion umfassen, die den vorgegebenen Flugpfad mit den Messdaten aus dem zweiten Teilbereich des Raumgebiets abgleicht. Ergibt der Abgleich, dass auf dem vorgesehenen Flugpfad ein Konflikt mit einem Hindernis droht, so kann die Steuereinheit den Flugpfad so abändern, dass das Hindernis vermieden wird. Beispielsweise kann die Steuereinheit das Fluggerät zum Stillstand bringen, in eine alternative Position oder entlang eines alternativen Flugpfads steuern. Ein mit den Messdaten aus dem zweiten Teilbereich entdecktes Objekt kann ein in fester Position angeordnetes Objekt, insbesondere ein der Erde verbundenes Objekt sein. Das Objekt kann auch ein sich bewegendes Objekt, insbesondere ein fliegendes Objekt sein.

Das Raumgebiet, in das die Messvorrichtung Messstrahlen aussendet, ist meist durch die Bauart der Messvorrichtung begrenzt. Beispielsweise kann die Messvorrichtung einen Controller umfassen, der bewirkt, dass die Messstrahlen nur in bestimmte Richtungen ausgesendet werden. Häufig ist das Raumgebiet auch durch die Form des Gehäuses der Messvorrichtung begrenzt. Die Messvorrichtung kann so gestaltet sein, dass das Raumgebiet mit einem einzelnen Messstrahl gescannt wird, dass also ein einzelner Messstrahl in zeitlich aufeinanderfolgender Sequenz in verschiedene Richtungen gesendet wird. Möglich ist auch, dass die Messvorrichtung das Raumgebiet mit mehreren Messstrahlen parallel kennt. Das Scannen kann quer zur Flugrichtung des Fluggeräts erfolgen.

Der Begriff Spiegel bezeichnet eine reflektierende Komponente, mit der die Richtung auftreffender Messstrahlen abgelenkt wird. Umfasst ist beispielsweise ein Prisma, mit dem die Messstrahlen abgelenkt werden.

Das Fluggerät kann ein satellitengestütztes Gerät zur Positionsbestimmung umfassen (GNSS-Empfänger - Global Navigation Satellite System). Die Positionsdaten von dem GNSS-Empfänger können eine Eingangsgröße für die Steuereinheit bilden, die in der Steuereinheit verarbeitet wird, um das Fluggerät entlang des vorgegebenen Flugpfads zu steuern. Im allgemeinen haben die Positionsdaten des GNSS-Empfängers eine für die Steuereinheit des Fluggeräts ausreichende Genauigkeit. Es gibt aber einer Abdeckung unterliegende Bereiche, beispielsweise in Gebirgstälern oder Häuserschluchten, in denen die Kommunikation mit den Satelliten gestört ist und die mit dem GNSS-Empfänger ermittelte Position deswegen nicht hinreichend genau ist. Dies kann insbesondere beim Landen Schwierigkeiten bereiten, was zur Folge haben kann, dass das Fluggerät aufgrund ungenauer GNSS-Positionsdaten mit einem Gegenstand kollidiert. Die Steuereinheit kann so eingerichtet sein, dass bei der Bestimmung des weiteren Flugpfads den Messdaten aus dem zweiten Teilbereich des Raumgebiets Vorrang gegeben wird vor den GNSS-Positionsdaten, wenn auf dem anhand der GNSS-Positionsdaten ermittelten Flugpfad ein Hindernis auftritt. Die Steuereinheit kann dann anhand der Messdaten aus dem zweiten Teilbereich des Raumgebiets einen Abschnitt des Flugpfads ermitteln, mit dem Hindernisse vermieden werden. Insbesondere kann auf diese Weise ein Flugpfad zu einem Landeplatz ermittelt werden, auf dem Hindernisse vermieden werden.

Es gibt andere Anwendungsfälle, in denen es von Vorteil sein kann, den Messdaten aus dem zweiten Teilbereich des Raumgebiets Vorrang vor den GNSS-Positionsdaten zu geben. Soll beispielsweise ein Fluggerät entlang einer Häuserschlucht gesteuert werden, so kann aus den Messdaten des zweiten Teilbereichs direkt der Abstand zu den Häuserfassaden und/oder zum Boden ermittelt werden. Der Flugpfad kann auf diese Weise mit höherer Genauigkeit bestimmt werden als anhand der GNSS-Positionsdaten. Möglich ist auch, das Fluggerät anhand der Messdaten aus dem zweiten Teilbereich des Raumgebiets in einem festen Abstand zu einer Struktur wie beispielsweise einer Felswand zu steuern. Weitere Anwendungsfälle können das Einhalten eines festen Abstands zu einer technischen Installation sein, die mit dem Fluggerät untersucht wird oder das Einhalten fester Abstände bei einem Rettungseinsatz.

Die Steuereinheit kann das Fluggerät anhand eines geschlossenen Regelkreises entlang des vorgegebenen Flugpfads steuern. In dem Regelkreis kann die Abweichung zwischen einer durch den vorgegebenen Flugpfad definierten Soll-Position und einer Ist-Position ermittelt werden und die Steuerbefehle für das Fluggerät so gestaltet werden, dass die Abweichung zwischen der Soll-Position und der Ist-Position vermindert wird. Der Regelkreis kann einen ersten Betriebsmodus umfassen, in dem die Ist-Position anhand von GNSS-Positionsdaten ermittelt wird. Der Regelkreis kann einen zweiten Betriebsmodus umfassen, in dem die Ist-Position anhand von Messdaten aus dem zweiten Teilbereich des Raumgebiets ermittelt wird. Zusätzlich oder alternativ dazu kann der Regelkreis so eingerichtet sein, dass der vorgegebene Flugpfad anhand von Messdaten aus dem zweiten Teil des Raumgebiets angepasst wird.

Die Messvorrichtung kann eine Lichtquelle umfassen, die einen Messstrahl in Form eines kollimierten Lichtstrahls abgibt. Die Messvorrichtung kann eine Scanvorrichtung umfassen, mit der der Messstrahl abgelenkt und in unterschiedliche Richtungen geleitet wird. Die Scanvorrichtung kann ein oder mehrere Scanspiegel umfassen, deren Ausrichtung zum Ablenken des Messstrahls verändert wird. Die Scanvorrichtung kann so gestaltet sein, dass das gesamte mit der Messvorrichtung abgedeckte Raumgebiet einer dichten Abtastung mit Messstrahlen unterliegt. Die Messvorrichtung kann insbesondere ein Lidar-Gerät sein.

Das mit der Messvorrichtung abgedeckte Raumgebiet wird durch die von der Messvorrichtung ausgehenden Messstrahlen definiert und weitet sich ausgehend von der Messvorrichtung auf. Das Raumgebiet kann beispielsweise die Form eines Kegels oder einer Pyramide haben, deren Spitze mit der Messvorrichtung zusammenfällt. Möglich ist auch, dass das Raumgebiet sich ringförmig um die Messvorrichtung herum erstreckt, wobei die Breite des Rings sich mit zunehmendem Abstand von der Messvorrichtung vergrößert.

Das Fluggerät kann so gestaltet sein, dass der erste Teilbereich den größeren Teil des Raumgebiets ausmacht. Insbesondere kann der erste Teilbereich wenigstens 70 %, vorzugsweise wenigstens 80 %, weiter vorzugsweise wenigstens 90 % des Raumgebiets umfassen. Dies steht unter der Annahme, dass die Aufnahme der Nutzdaten Vorrang hat und dass ein kleinerer Anteil der aufgenommenen Messdaten ausreicht, um die Navigationsanforderungen zu erfüllen. Alternativ sind auch Gestaltungen möglich, bei denen der zweite Teilbereich mehr als die Hälfte des Raumgebiets einnimmt. Dies kann sinnvoll sein, wenn die Kollisionsvermeidung sehr hohe Anforderungen stellt, beispielsweise weil das Fluggerät in der Nähe von Hochspannungsleitungen betrieben wird.

Der Spiegel, der die Messstrahlen im zweiten Teil des Raumgebiets ablenkt, kann oberhalb der Messvorrichtung angeordnet sein. Insbesondere kann der Spiegel in einer vertikalen Position angeordnet sein, die zwischen der Messvorrichtung und einem Körper des Fluggeräts liegt.

Zusätzlich oder alternativ dazu kann unterhalb der Messvorrichtung ein Spiegel angeordnet sein, der die Messstrahlen im zweiten Teil des Raumgebiets ablenkt. Das Fluggerät kann Füße umfassen, die unterhalb des Spiegels angeordnet sind, so dass das Fluggerät beim Landen auf den Füßen zu stehen kommt, ohne dass der Spiegel mit dem Boden kollidiert. Möglich sind auch Spiegel, die seitlich der Messvorrichtung angeordnet sind, also eine entsprechende vertikale Position haben wie die Messvorrichtung.

Betrachtet man einen horizontalen Schnitt durch das unterhalb der Messvorrichtung angeordnete Raumgebiet, so kann der Spiegel in einem peripheren Bereich des Raumgebiets angeordnet sein. Ein zentraler Bereich des Raumgebiets kann frei von Spiegeln sein. Bezogen auf eine von der Messvorrichtung ausgehende vertikale Achse kann der Abstand zwischen der Achse und dem peripheren Bereich des Raumgebiets mindestens 50 %, vorzugsweise mindestens 70 %, weiter vorzugsweise mindestens 80 % des Abstands zwischen der Achse und der Grenze des Raumgebiets entsprechen. Dies kann für jede der von der Achse ausgehenden Richtungen gelten. Die vertikale Richtung ist definiert durch einen Flugzustand, in dem das Fluggerät in einer horizontalen Flugposition in einem stationären Zustand ist. Auf diese Weise bleibt ein möglich großer Teil des zentralen Bereichs frei zum Gewinnen von Nutzdaten, die für andere Zwecke als für Zwecke der Navigation des Fluggeräts verwendet werden können.

Der Spiegel kann ein ebener Spiegel sein. Alternativ kann der Spiegel ein gewölbter Spiegel sein. Durch gewölbte Spiegel kann Einfluss auf die räumliche Verteilung der Messstrahlen genommen werden. Beispielweise können die Messstrahlen auf einen konvex gewölbten Spiegel geleitet werden, um die Richtung der Messstrahlen aufzuweiten. Werden beispielsweise im ersten Teilbereich des Raumgebiets Messdaten mit hoher Auflösung gewonnen, während im zweiten Teilbereich des Raumgebiets eine weniger hoher Auflösung erforderlich ist, so kann durch die Verwendung gewölbter Spiegel die Auflösung im zweiten Teilbereich reduziert werden, während gleichzeitig die Messstrahlen über einen größeren Bereich des Raums verteilt werden.

Der Spiegel kann schwenkbar gelagert sein. Die Schwenklagerung kann so gestaltet sein, dass die Ausrichtung des Spiegels relativ zu dem Körper des Fluggeräts und/oder zu der Messvorrichtung einstellbar ist. Damit wird es möglich, die Messstrahlen im zweiten Teil des Raumgebiets abhängig von den Anforderungen in verschiedene Richtungen abzulenken. Beispielsweise können beim Vorwärts-Flug die Messstrahlen nach vorne umgelenkt werden, so dass vor dem Fluggerät liegende Hindernisse entdeckt werden können. Hingegen können beim Rückwärts-Flug die Messstrahlen nach hinten umgelenkt werden, um dort liegende Hindernisse zu entdecken.

Das Fluggerät kann eine Mehrzahl von Spiegeln umfassen, die gemeinsam den zweiten Teilbereich des Raumgebiets definieren. Der zweite Teilbereich kann mehrere voneinander getrennte Teilgebiete innerhalb des Raumgebiets umfassen. Die Spiegel können verschiedene der genannten Merkmale aufweisen.

Das Fluggerät kann ein unbemanntes Fluggerät, beispielsweise in Form eines Multikopters sein. Das Abfluggewicht des Fluggeräts kann beispielsweise zwischen 1 kg und 25 kg, vorzugsweise zwischen 1 kg und 4 kg liegen.

Die Erfindung betrifft ein Verfahren zum Betreiben eines Fluggeräts, bei dem ausgehend von einer Messvorrichtung in ein Raumgebiet hinein Messstrahlen ausgesendet werden, wobei das Fluggerät einen Spiegel umfasst, der die Messstrahlen in einem ersten Teilbereich des Raumgebiets nicht ablenkt und der die Messstrahlen in einem zweiten Teilbereich des Raumgebiets ablenkt, wobei die Messdaten aus dem ersten Teilbereich des Raumgebiets von den Messdaten aus dem zweiten Teilbereich des Raumgebiets separiert werden und wobei die Messdaten aus dem zweiten Teilbereich des Raumgebiets einer getrennten Verarbeitung zugeführt werden.

Das Verfahren kann mit weiteren Merkmalen fortgebildet werden, die im Zusammenhang des erfindungsgemäßen Fluggeräts beschrieben sind. Das Fluggerät kann mit weiteren Merkmalen fortgebildet werden, die im Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:

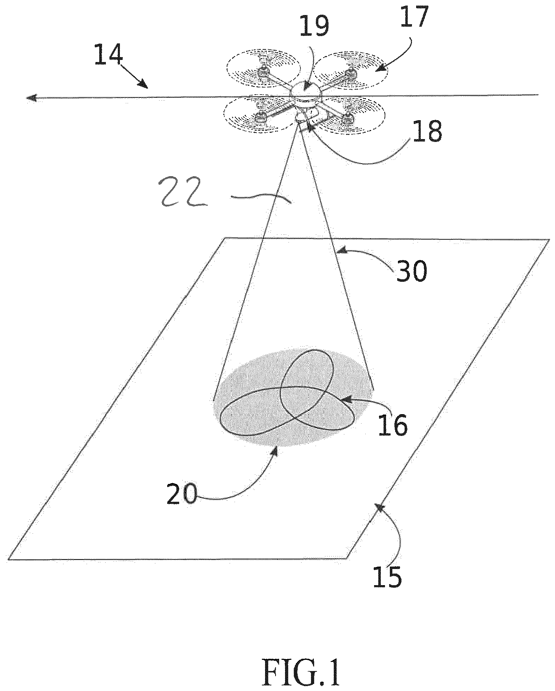

- Fig. 1:: ein erfindungsgemäßes Fluggerät beim Aufnehmen von Messdaten;
- Fig. 2:: eine schematische Darstellung eines erfindungsgemäßen Fluggeräts;
- Fig. 3:: einen Schnitt durch das mit der Messvorrichtung des Fluggeräts aus Fig. 2 abgedeckte Raumgebiet;
- Fig. 4:: eine alternative Ausführungsform eines erfindungsgemäßen Fluggeräts;
- Fig. 5:: ein Detail des Fluggeräts aus Fig. 4 in vergrößerter Darstellung;
- Fig. 6-7:: die Ansicht aus Fig. 5 bei alternativen Ausführungsformen der Erfindung;

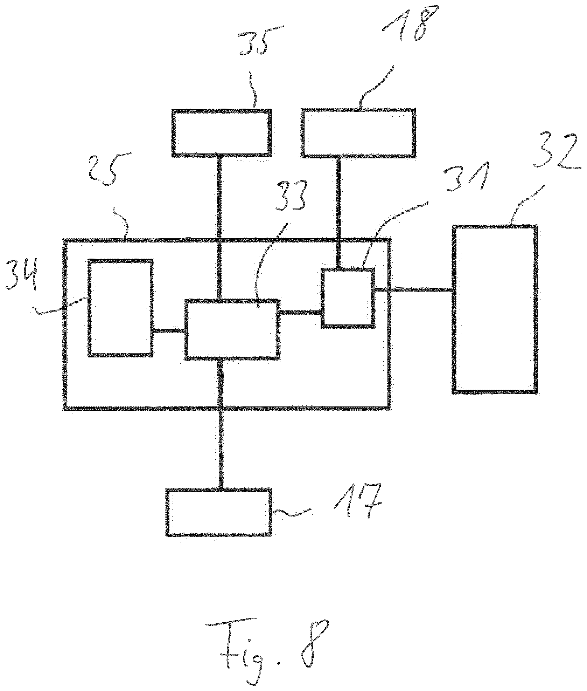

- Fig. 8:: eine schematische Darstellung der Steuereinheit eines erfindungsgemäßen Fluggeräts;
- Fig. 9:: eine alternative Ausführungsform der Erfindung.

Ein erfindungsgemäßes Fluggerät in Form eines Quadkopters 19 mit vier Rotoren 17 fliegt entlang eines vorgegebenen Flugpfads 14 oberhalb der Erdoberfläche 15. Der Quadkopter 19 trägt eine Messvorrichtung in Form eines Lidar-Geräts 18, das unten am Körper des Quadkopters 19 aufgehängt ist. Das Lidar-Gerät 18 sendet Messstrahlen 30 aus, die mit einer innerhalb des Lidar-Geräts 18 angeordneten Scanvorrichtung so abgelenkt werden, dass ein unterhalb des Quadkopters 19 liegendes Gebiet 20 im Wesentlichen flächendeckend abgetastet wird. Das Raumgebiet 22, das mit den Messstrahlen 30 abgedeckt wird, hat die Form eines Kegels, wobei die Spitze des Kegels bei dem Lidar-Gerät 18 liegt.

Zurückgeworfene Anteile des Messstrahls werden in dem Lidar-Gerät 18 detektiert. Aus der Laufzeit des Messstrahls 30 von dem Lidar-Gerät 18 zur Erdoberfläche 15 und zurück sowie anhand der bekannten Position des Quadkopters 19 relativ zur Erdoberfläche 15 kann ein digitales Abbild der Form der untersuchten Oberfläche erstellt werden. Das digitale Abbild entspricht den Nutzdaten, die durch den Einsatz des Quadkopters 19 gewonnen werden.

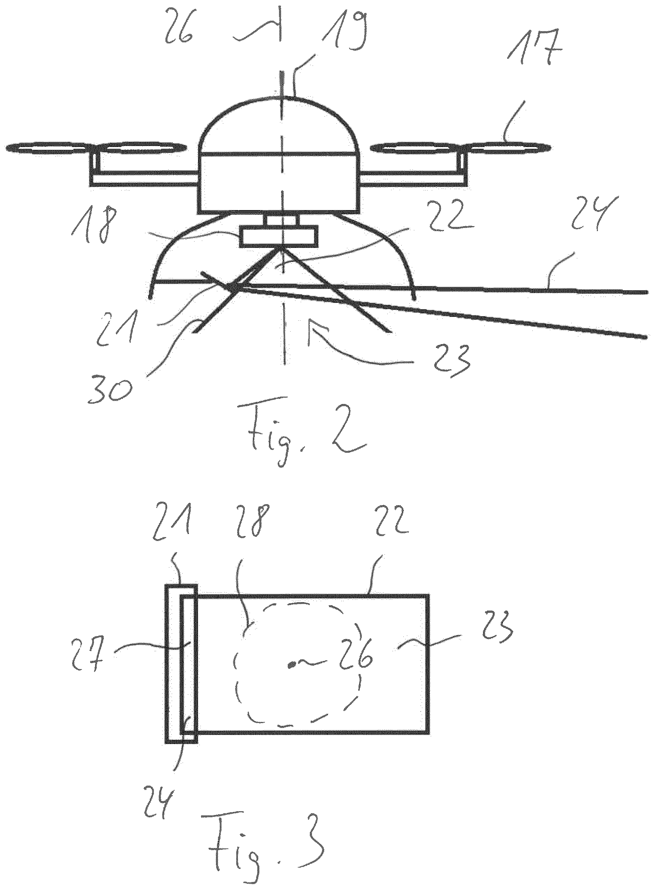

Gemäß Fig. 2 umfasst der Quadkopter 19 einen Spiegel 21, der so positioniert ist, dass ein Teil der von dem Lidar-Gerät 18 abgegebenen Messstrahlen 30 auf den Spiegel 21 trifft, während ein anderer Teil der von dem Lidar-Gerät 18 abgegebenen Messstrahlen 30 nicht auf den Spiegel trifft. Das mit den Messstrahlen 30 abgedeckte Raumgebiet 22 wird auf diese Weise unterteilt in einen ersten Teilbereich 23, in dem der Messstrahl 30 sich unbeeinflusst durch den Spiegel ausbreitet, und einen zweiten Teilbereich 24, in dem der Messstrahl 30 durch den Spiegel 21 abgelenkt wir. Das Raumgebiet 22 hat in diesem Ausführungsbeispiel die Form einer Pyramide mit rechteckigem Grundriss.

Mit den Messstrahlen 30 in dem ersten Teilbereich 23 wird die Erdoberfläche 15 abgetastet, um die gewünschten Nutzdaten zu gewinnen. Die Messstrahlen 30 in dem zweiten Teilbereich 24 des Raumgebiets 25 dienen als Navigationsdaten, die in der Steuereinheit 25 des Quadkopters 19 verarbeitet werden, um Steuerbefehle zu erzeugen, mit denen die Rotoren 17 des Quadkopters 19 angesteuert werden.

Gemäß dem in Fig. 3 gezeigten Horizontalschnitt durch das Raumgebiet 22 deckt der Spiegel einem peripheren Bereich 27 des Raumgebiets 22 ab, während ein zentraler Bereich 28, der sich um eine vertikale Achse 26 des Quadkopters 19 herum erstreckt, nicht durch den Spiegel 21 beeinträchtigt ist. Es steht also der weit überwiegende Teil des mit dem Lidar-Gerät 18 abgedeckten Raumgebiets 22 zur Verfügung, um Nutzdaten zu gewinnen.

Die auf den Spiegel 21 treffenden Messstrahlen 30 werden so abgelenkt, dass sie sich im Wesentlichen in horizontaler Richtung ausbreiten. Treffen die Messstrahlen 30 dort auf einen Gegenstand, so kann aus den zurückgeworfenen Anteilen des Messstrahls auf die Richtung und die Entfernung zu dem Gegenstand geschlossen werden.

Die mit dem Lidar-Gerät 18 aufgenommenen Messdaten werden einem Analysemodul 31 der Steuereinheit 25 zugeführt. Das Analysemodul 31 trennt die im ersten Teilbereich 23 aufgenommenen Nutzdaten von den im zweiten Teilbereich 24 aufgenommenen Navigationsdaten. Die Nutzdaten werden in einem Speicher 32 abgelegt und dort zur weiteren Verwendung und Auswertung bereitgehalten. Insbesondere kann aus den Nutzdaten ein digitales Abbild der untersuchten Struktur erzeugt werden.

Die Navigationsdaten werden einem Zentralrechner 33 der Steuereinheit 25 zugeführt. Der Zentralrechner 33 hat die Aufgabe, Steuerbefehle an die Antriebe der Rotoren 17 zu senden, so dass der Quadkopter 19 sich entlang des gewünschten Flugpfads 14 bewegt. Informationen über den vorgegebenen Flugpfad sind in einem Speicherelement 34 der Steuereinheit 25 hinterlegt. Der Zentralrechner 33 greift auf das Speicherelement 34 zu und verwendet den vorgegebenen Flugpfad 14 als Sollvorgabe, aus der sich für jeden Zeitpunkt des Flugs eine Soll-Position ableitet.

Der Quadkopter 19 umfasst weiter einen GNSS-Empfänger 35, der laufend eine Information über die Ist-Position des Quadkopters 19 liefert. Die Positionsinformationen von dem GNSS-Empfänger 35 werden dem Zentralrechner 33 als Eingangsgröße zugeführt. Der Zentralrechner 33 verarbeitet die Informationen und leitet daraus die Steuerbefehle ab, mit denen der Quadkopter 19 entlang des vorgegebenen Flugpfads 14 gesteuert wird.

Die mit dem Lidar-Gerät 18 aufgenommenen Navigationsdaten werden gemäß einem Ausführungsbeispiel in dem Zentralrechner 33 zum Zwecke der Hindernisvermeidung verarbeitet. Zeigen die Navigationsdaten ein Hindernis in der Umgebung des Quadkopters 19 an, so führt der Zentralrechner 33 eine Überprüfung durch, ob es einen zukünftigen Zeitpunkt gibt, zu dem es einen Konflikt zwischen dem vorgegebenen Flugpfad 14 und dem Hindernis gibt. Ist dies der Fall, so ändert der Zentralrechner den Flugpfad selbsttätig ab, so dass das Hindernis vermieden wird. Beispielweise kann der Flugpfad so abgeändert werden, dass das Hindernis umflogen wird und der Quadkopter 19 anschließend auf den vorgegebenen Flugpfad 14 zurückkehrt.

In einem anderen Ausführungsbeispiel umfasst der in dem Speicherelement 34 hinterlegte vorgegebene Flugpfad 14 einen Abschnitt, in dem die Position des Quadkopters 19 nicht in den Koordinaten des GNSS-Systems, sondern relativ zu Objekten in der Umgebung des Quadkopters 19 definiert ist. Ein Beispiel dafür könnte sein, dass die Abbruchkante einer Tagebau-Grube untersucht werden soll. Der vorgegebene Flugpfad 14 führt dann anhand von GNSS-Koordinaten in die Nähe der Abbruchkante. Anschließend ist der vorgegebene Flugpfad 14 so definiert, dass der Quadkopter 19 sich entlang der Abbruchkante bewegt und dabei einen vorgegebenen Abstand zu der Abbruchkante einhält. Für dieses Ausführungsbeispiel umfasst die Steuereinheit 25 einen ersten Betriebsmodus, in dem die Ist-Position aus dem GNSS-Empfänger 35 abgeleitet wird, und einen zweiten Betriebsmodus, in dem die Ist-Position aus den aus den Navigationsdaten des Lidar-Systems 18 abgeleitet wird.

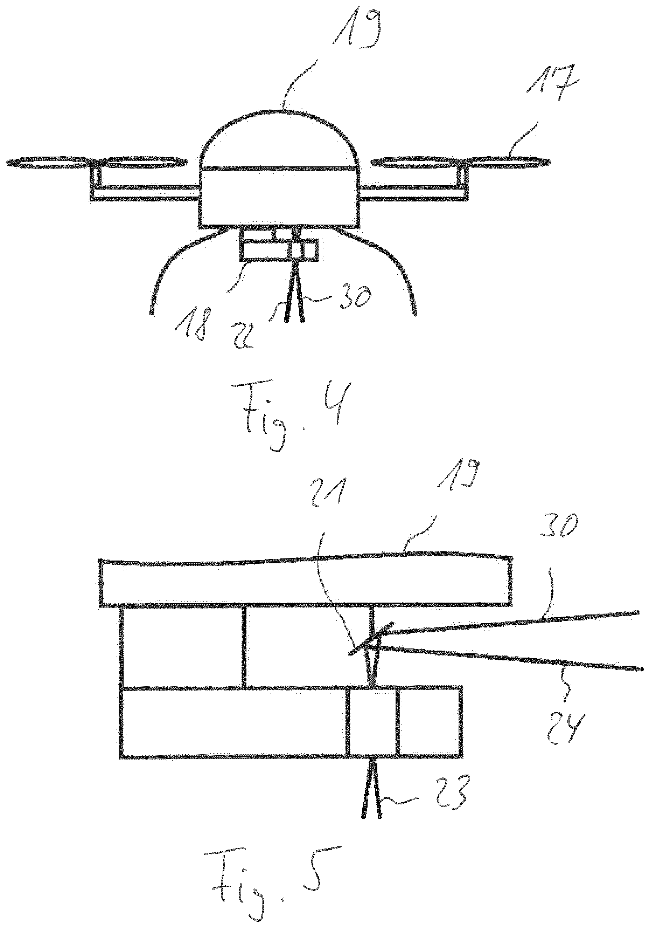

Bei der alternativen Ausführungsform gemäß Fig. 4 umläuft der Messstrahl 30 eine horizontale Achse, so dass sich das mit dem Messstrahl 30 abgedeckte Raumgebiet 22 ringförmig um das Lidar-Gerät 18 herum erstreckt. Mit zunehmendem Abstand von dem Lidar-Gerät 18 weitet das Raumgebiet 22 sich auf.

Das Raumgebiet 22 umfasst in diesem Ausführungsbeispiel einen Bereich, der nutzlos für die Gewinnung von Nutzdaten ist, weil der Messstrahl 30 in Richtung des Körpers des Quadkopter 19 aus dem Lidar-Gerät 18 austritt. Gemäß Fig. 5 ist an der Unterseite des Körpers des Quadkopters 19 ein Spiegel 21 angebracht, der den Messstrahl 30 ablenkt. Es ergibt sich ein zweiter Teilbereich 24 des Raumgebiets 22, der sich ausgehend von dem Quadkopter 19 in horizontaler Richtung erstreckt. Die in dem zweiten Teilbereich 24 aufgenommenen Messdaten können wie gehabt als Navigationsdaten verwendet werden.

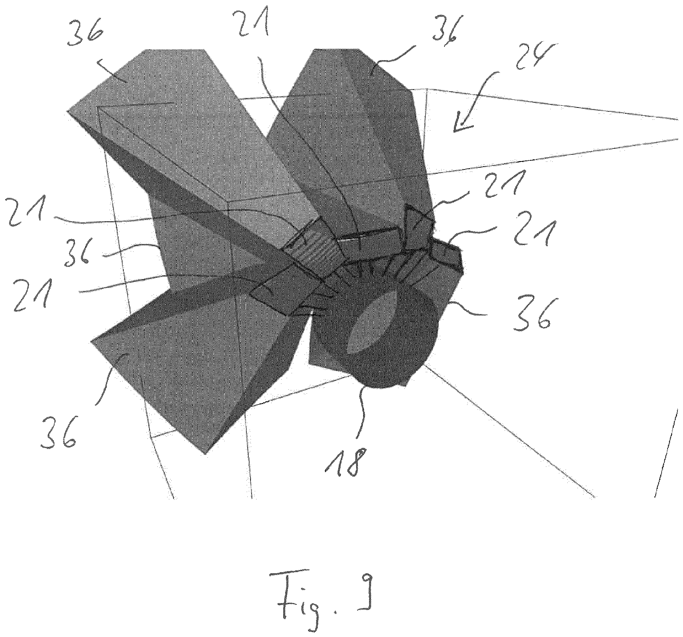

In dem Ausführungsbeispiel gemäß Fig. 9 sind zwischen dem Lidar-Gerät 18 und dem Körper des Quadkopters 19 insgesamt fünf Spiegel 21 angeordnet. Mit jedem der Spiegel 21 wird ein Teilgebiet 36 des zweiten Teilbereichs 24 definiert. Die Teilgebiete 36 überlappen miteinander und bilden in der Summe den zweiten Teilbereich 24 des Raumgebiets 22.

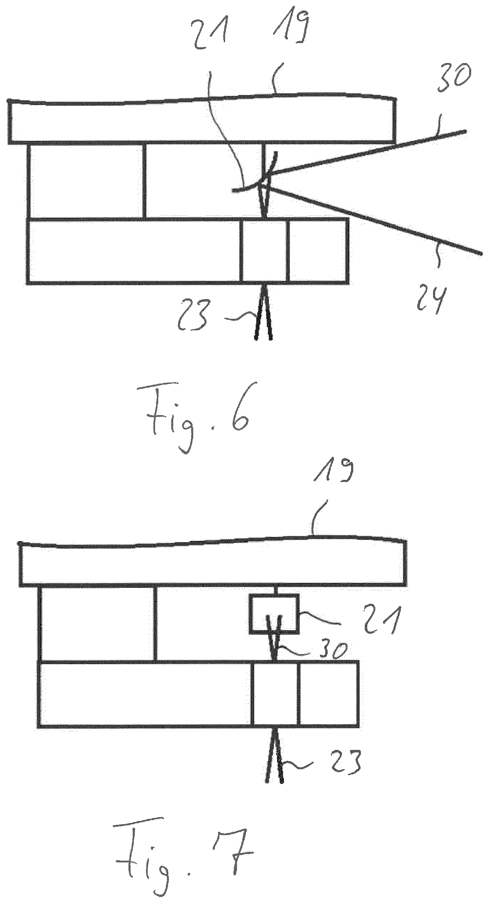

In Fig. 6 ist ein alternatives Ausführungsbeispiel gezeigt, bei dem der Spiegel 21 eine konvex gewölbte Form hat. Der zweite Teilbereich 24 des Raumgebiets 22 wird dadurch aufgeweitet, so dass Navigationsdaten aus einem größeren Gebiet bereitgestellt werden können. Eine Verminderung der Ortsauflösung der Navigationsdaten wird im Gegenzug in Kauf genommen.

Bei der Ausführungsform gemäß Fig. 7 kann der Spiegel 21 um eine senkrechte Achse relativ zu dem Körper des Quadkopters 19 gedreht werden. In Fig. 7 ist der Spiegel 21 so gedreht, dass die Messstrahlen 30 in eine Richtung umgelenkt werden, die aus der Blattebene herausführt. Dies kann beispielsweise genutzt werden, indem der Spiegel 21 immer so gedreht wird, dass Navigationsdaten immer in der Richtung gewonnen werden, in die der Quadkopter 19 gegenwärtig fliegt. Ein in Flugrichtung liegendes Hindernis kann auf diese Weise frühzeitig erkannt werden und der Flugpfad entsprechend angepasst werden.

## Patentansprüche

1. Fluggerät, umfassend eine Messvorrichtung (18), die ausgehend von der Messvorrichtung (18) in ein Raumgebiet (22) hinein Messstrahlen (30) aussendet, wobei das Fluggerät (19) einen Spiegel (21) umfasst, der die Messstrahlen (30) in einem ersten Teilbereich (23) des Raumgebiets (22) nicht ablenkt und der die Messstrahlen in einem zweiten Teilbereich (24) des Raumgebiets (22) ablenkt, und mit einer Steuereinheit (25), die Messdaten aus dem ersten Teilbereich (23) des Raumgebiets (22) von Messdaten aus dem zweiten Teilbereich (24) des Raumgebiets (22) separiert und die Messdaten aus dem zweiten Teilbereich (24) des Raumgebiets (22) einer getrennten Verarbeitung zuführt.

2. Fluggerät nach Anspruch 1, **dadurch gekennzeichnet, dass** die Messdaten aus dem ersten Teilbereich (23) des Raumgebiets (22) Nutzdaten sind.

3. Fluggerät nach Anspruch 1 oder 2, **dadurch gekennzeichnet, dass** die Messdaten aus dem zweiten Teilbereich (24) des Raumgebiets (22) Navigationsdaten sind.

4. Fluggerät nach Anspruch 3, **dadurch gekennzeichnet, dass** die Navigationsdaten in der Steuereinheit (25) zum Zwecke der Hindernisvermeidung verarbeitet werden.

5. Fluggerät nach einem der Ansprüche 1 bis 4, **dadurch gekennzeichnet, dass** die Steuereinheit (25) einen Betriebsmodus aufweist, in dem beim Bestimmen des Flugpfads die Messdaten aus dem zweiten Teilbereich (24) des Raumgebiets (22) Vorrang vor GNSS-Positionsdaten haben.

6. Fluggerät nach einem der Ansprüche 1 bis 5, **dadurch gekennzeichnet, dass** der erste Teilbereich (23) wenigstens 70 %, vorzugsweise wenigstens 80 %, weiter vorzugsweise wenigstens 90 % des Raumgebiets (22) umfasst.

7. Fluggerät nach einem der Ansprüche 1 bis 6, **dadurch gekennzeichnet, dass** der Spiegel (21) in einer vertikalen Position angeordnet ist, die zwischen der Messvorrichtung (18) und einem Körper des Fluggeräts (19) liegt.

8. Fluggerät nach einem der Ansprüche 1 bis 7, **dadurch gekennzeichnet, dass** der Spiegel (21) in einer vertikalen Position angeordnet ist, die unterhalb der Messvorrichtung (18) liegt.

9. Fluggerät nach Anspruch 8, **dadurch gekennzeichnet, dass** der Spiegel (21) in einem peripheren Bereich (27) des Raumgebiets (22) angeordnet ist und dass ein zentraler Bereich (28) des Raumgebiets (22) frei von Spiegeln (21) ist.

10. Fluggerät nach einem der Ansprüche 1 bis 9, **dadurch gekennzeichnet, dass** der Spiegel (21) ein gewölbter Spiegel ist.

11. Fluggerät nach einem der Ansprüche 1 bis 10, **dadurch gekennzeichnet, dass** der Spiegel (21) schwenkbar gelagert ist.

12. Fluggerät nach einem der Ansprüche 1 bis 11, **dadurch gekennzeichnet, dass** die Messvorrichtung (18) ein Lidar-Gerät ist.

13. Verfahren zum Betreiben eines Fluggeräts, bei dem ausgehend von einer Messvorrichtung (18) in ein Raumgebiet (22) hinein Messstrahlen (30) ausgesendet werden, wobei das Fluggerät einen Spiegel (21) umfasst, der die Messstrahlen (30) in einem ersten Teilbereich (23) des Raumgebiets (22) nicht ablenkt und der die Messstrahlen in einem zweiten Teilbereich (24) des Raumgebiets (22) ablenkt, wobei die Messdaten aus dem ersten Teilbereich (23) des Raumgebiets (22) von den Messdaten aus dem zweiten Teilbereich (24) des Raumgebiets (22) separiert werden und wobei die Messdaten aus dem zweiten Teilbereich (24) des Raumgebiets (22) einer getrennten Verarbeitung zugeführt werden.
